# EUROPEAN PATENT SPECIFICATION

(11) **EP 1 312 841 B1**
(45) Date of publication and mention of the grant of the patent: **02.11.2005**
(21) Application number: 01127044.4
(22) Date of filing: 14.11.2001
(51) Int. Cl.: F16J 15/34

(54) **A mechanical axial seal for a compressor**
Axiale Gleitringdichtung für einen Kompressor
Garniture mécanique d'étanchéité pour un compresseur

(43) Date of publication of application: 21.05.2003
(73) Proprietor: Zexel Valeo Climate Control Corporation, Saitama 360-0193 (JP)
(72) Inventor: Schwarzkopf, Otfried, 71106 Magstadt (DE)
(74) Representative: Popp, Eugen

(56) References cited:
- WO-A-01/23790

## Description

The present invention relates to a mechanical axial seal for the shaft of a compressor, in particular a CO₂ compressor for a vehicle air-conditioning system, and to a compressor incorporating such a mechanical seal. Such a shaft seal has been disclosed in WO-A-01/23790.

In an automotive vehicle, a swash plate compressor is often used in the air-conditioning system and is usually driven directly by the vehicle engine. To this end, it is usually mounted thereon as an ancillary component. Traditionally, tetrafluoroethane (R134a) has been used as the refrigerant and this has enabled a simple rotary shaft seal (a lip seal) to be used in the compressor. However, the use of carbon dioxide as a refrigerant is now being investigated widely to replace R134a as the refrigerant but unlike conventional refrigerants it has a significantly higher vapour pressure. This results in a high pressure differential between the suction side and the discharge side of the compressor and therefore requires the provision of a shaft seal with high sealing capabilities. This can significantly increase the cost of the seal required for a CO₂ compressor over the simply rotary shaft seal that can be employed when using a conventional refrigerant. As a result, the advantages provided by the use of CO₂ can be cancelled out.

It is an object of the present invention to provide a mechanical axial seal for a compressor, in particular a CO₂ compressor, which overcomes or substantially mitigates the aforementioned disadvantages.

It is an additional object of the invention to provide a mechanical axial seal for a compressor which enables the compressor to be made shorter in length and therefore more compact. Apart from the space saving advantages of such a compressor, the cost of production is also significantly reduced.

According to a first aspect of the present invention there is provided a mechanical axial seal for a swash or wobble plate compressor comprising a rotary portion for rotation with a drive shaft of the compressor and a stationery portion that cooperates with the rotary portion to form a seal, and characterised in that the rotary portion is located in a casing defined by an axially extended portion of a drive mechanism of the compressor.

Preferably, the casing forms a housing for the rotary portion of the seal.

If the rotary portion of the seal is housed in an extended portion of the drive mechanism of the compressor rather than in a housing especially provided for the purpose, it means that the manufacture of such a housing may be eliminated from the manufacturing process of the compressor with appropriate savings in time, materials and therefore cost. In either case, it is possible to reduce the length of the compressor, which allows for a more efficient compact design.

Preferably also, therefore, the casing is formed by an extension to a portion of the drive mechanism which defines one of the races for a bearing for the drive shaft.

Alternatively, the casing is formed by an extension to a drive plate for the swash or wobble plate of the compressor.

Preferably also, the rotary portion is located parallel, radially, with a bearing for the drive shaft.

Preferably also, the casing defines on an outer circumferential surface an inner race of the bearing.

Preferably also, the casing comprises an axial cylindrical projection having an outer surface defining the race and an inner surface defining a recess in which the rotary portion is located.

Preferably also, the drive plate is formed integrally with the axial cylindrical projection by moulding or by forging.

Preferably, the rotary portion comprises a gasket ring and an O-ring, which is located in an annular recess defined by the gasket ring to seal the joint between the shaft and the gasket ring.

Preferably also, the rotary portion is urged into contact with the stationary portion of the seal by the biasing spring which bears against a face defined by the drive mechanism of the compressor.

Preferably also, the casing comprises one or more guide members which project from an edge of the casing and engage the circumference of the gasket ring to hold it in position.

Preferably also, the guide members engage respectively in one or more axial grooves defined by the gasket so that the gasket can be displaced axially along the shaft.

According to a second aspect of the present invention there is provided a compressor for a vehicle air conditioning system comprising a mechanical seal according to the first aspect of the present invention.

According to a third aspect of the present invention there is provided a compressor for a vehicle air conditioning system comprising a housing, a drive shaft, a swash or wobble plate arrangement operatively connected to the drive shaft and driven by a drive mechanism attached to the shaft, and a mechanical axial seal comprising a rotary portion that rotates with the drive shaft and a stationary portion that cooperates with the rotary portion to form a seal, and characterised in that the rotary portion is located in a casing which is defined by an axially extended portion of the drive mechanism of the compressor.

The present invention will now be described by way of example with reference to the accompanying drawings, in which:-
Fig. 1 is a diagrammatic, longitudinal cross-sectional view of part of a swash plate compressor incorporating a first embodiment of mechanical axial seal according to the invention;
Fig. 2 is a view similar to Fig. 1 but of a second embodiment of seal;
Fig. 3 is a view similar to Fig. 2 showing a third embodiment of seal; and
Fig. 4 is a perspective view from one side of a drive plate for the compressor as shown in Fig. 3.

In the following description the same reference numerals are used for the same or equivalent components of the invention and associated apparatus.

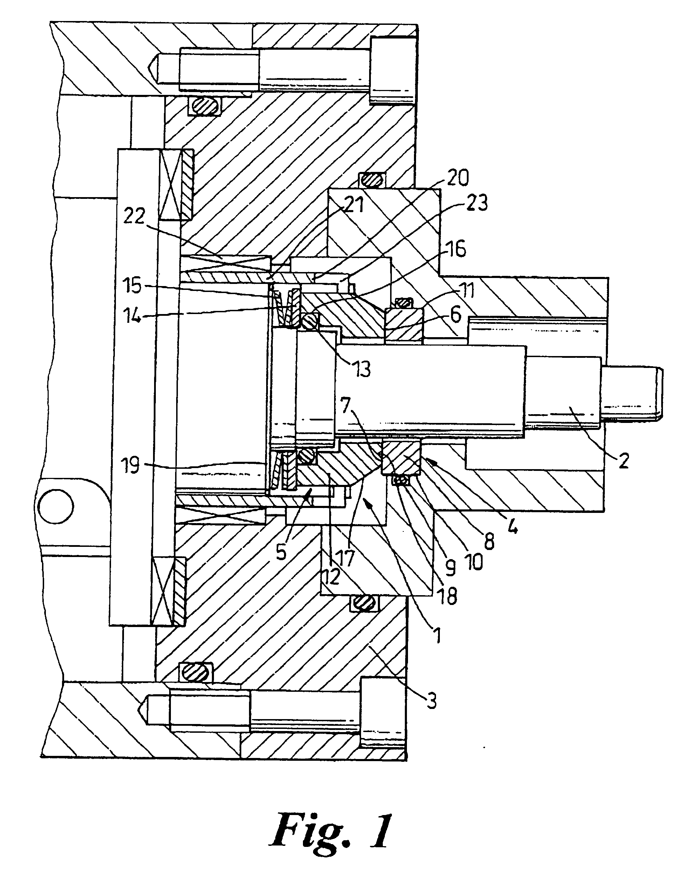

In a first embodiment, as shown in Fig. 1, a mechanical axial seal 1 for a swash or wobble plate compressor is arranged between a drive shaft 2 of the compressor and a housing 3 of the compressor. The seal 1 comprises two portions, namely a stationary portion 4 that is connected to the housing 3 and a rotary portion 5 that rotates with the drive shaft 2. The seal itself is therefore effected between a stationary face 6 defined by the stationary portion 4 and a running face 7 defined by the rotary portion 5, as will now be described.

The stationary portion 4 of the seal comprises a stationary annular ring 8, which surrounds the shaft 2, and an 0-ring 9. The ring 8 is located in an annular recess 10 defined by a portion of the housing 3 of the compressor. The ring 8 is immovably fitted into the recess 10 and has its outer peripheral surface 11 sealed against the housing by the 0-ring 9, which is fitted into an annular groove formed in the housing 3.

The rotary portion 5 of the seal comprises a gasket ring 12, an O-ring 13, a retaining plate 14 and a biasing spring 15. The gasket ring 12 rotates with the shaft 2 and the O-ring 13 is located in an annular recess 16 defined by the gasket ring 12 to seal the joint between the shaft 2 and the gasket ring 12. The O-ring 13 also centres the gasket ring 12 on the shaft 2. At one end of a axially tapering portion 17, the gasket ring 12 defines a radial annular surface which comprises the running face 7 that bears against the stationary face 6 of the annular ring 8. A circumferential groove 18 is formed in the running face 7 that serves as an oil pocket to lubricate the joint between the faces 6 and 7. The gasket ring 12 is urged into contact with the annular ring 8 by the biasing spring 15 which at one end bears against the retaining plate 14 that abuts the side of the ring 12 opposite the running face 7. The other end of the spring 15 bears against a shoulder 19 formed by a portion of the shaft 2 which has an enlarged diameter.

The rotary portion 5 is housed in a casing 20 which is formed by an axially extended portion of a race 21 of a bearing 22 located between the shaft 2 and the housing 3. The race 21 comprises the inner race 21 of the bearing 22 and is formed by a annulus which is non-rotationally attached to the shaft 2. For example, the race 21 may be press-fitted to the shaft 2. The casing 20 forms a recess in which the spring 15, retaining plate 14, O-ring 13 and a portion of the gasket ring 12 are retained. A series of spaced guide members 23 project from the edge of the casing 20 and engage the circumference of the gasket ring 12 to hold it in position. The guide members 23 preferably engage in axial grooves (not shown) formed in the gasket 12 so that the latter can be displaced axially to a small degree along the shaft 2 under the influence of the spring 15.

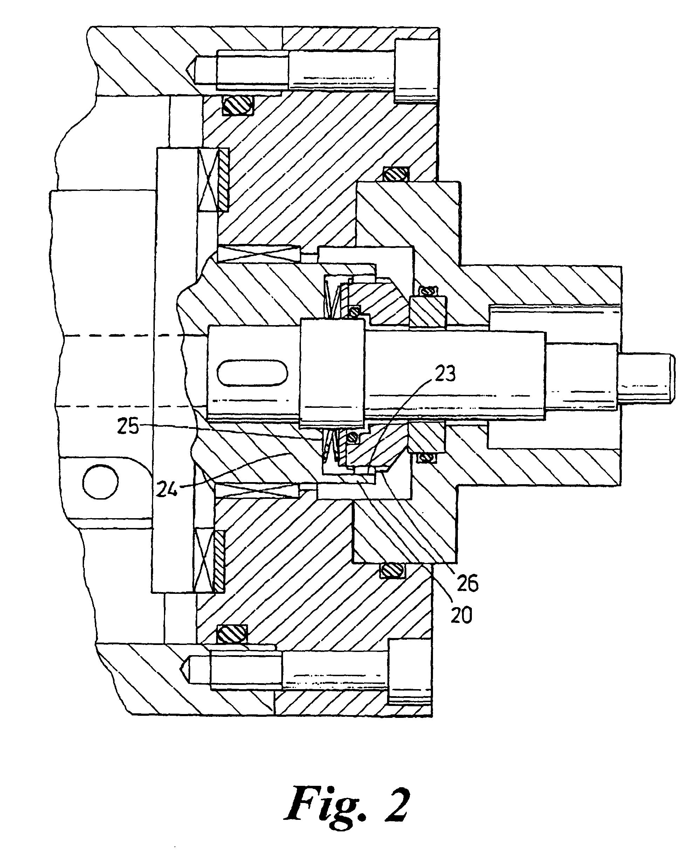

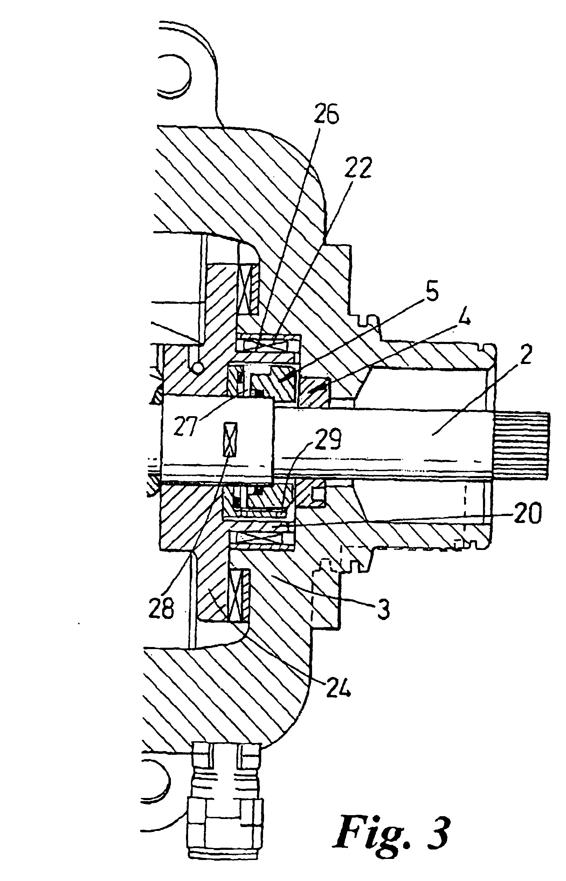

In a second embodiment, as shown in Fig. 2, the rotary portion 5 is housed in a casing 20 formed by an axially extended portion of a drive plate 24 which is secured to the shaft 2 to rotate therewith. The drive plate 24 is used to drive a swash plate (not shown) of the compressor by means of an articulated arm (not shown). As shown in Fig. 3, a portion of the drive plate 24 is recessed to define the annular casing 20 in which the ring 12, the O-ring 13, the retaining plate 14 and the biasing spring 15 are located. It will be appreciated that in this embodiment, the end of the spring 15 opposite that which bears against the retaining plate 14 bears against a face 25 of the drive plate 24. As in the first embodiment, the casing 20 is provided with guide members 23 that engage in axial grooves 26 formed in the gasket 12. As previously described, this enables the gasket 12 to be displaced to a predetermined extent axially along the shaft 2 under the influence of the spring 15.

Whilst the drive plate 24 is normally manufactured separately from the drive shaft 2 and then secured thereto, it will be appreciated that the drive plate 24 could be integrally made with the drive shaft 2. In this case, the casing 20 would be formed by a recess machined into the integrated component.

Hence, the fact that the rotary portion 5 of the seal 1 is housing a portion of the drive mechanism of the compressor, namely in a casing 20 formed by either the race or the drive plate means that a specially constructed additional housing member for the portion 5 does not have to be provided. The number of component parts of the compressor is therefore reduced which leads to a saving in assembly effort and time, thus enabling the cost of the compressor to be reduced.

In the embodiment shown in Figs. 1 and 2, the seal 1 is located on the shaft between the bearing 22 and the housing 3. In a third embodiment, as shown in Fig 3, the rotary portion 5 of the seal 1 is located parallel, radially, with the bearing 22. The casing 20 therefore defines on an outer circumferential surface an inner race 26 of the bearing 22. This race 26 may be formed by a polished surface of the casing 20 or by an annulus fitted to the exterior of the casing 20.

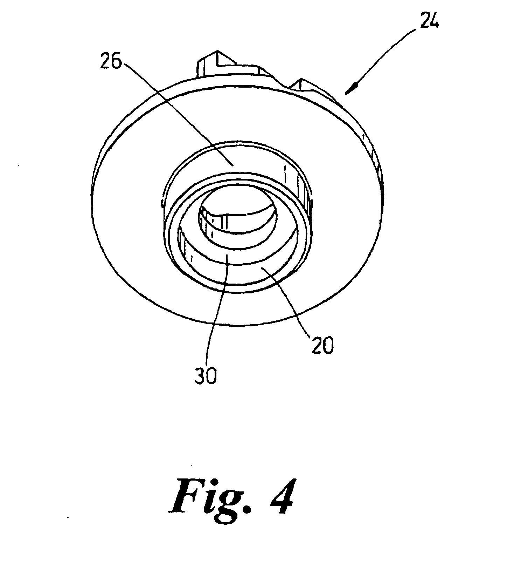

The drive plate 24 comprising the casing 20 as shown in Fig. 3 is shown in Fig. 4. The casing 20 is formed by an axial cylindrical projection from one side, the outer surface of which projection defines the race 26 and the inner surface of which projection defines a recess in which the rotary portion 5 of the seal 1 is located. In the illustrated embodiment, the casing 20 does not need to form a housing for the rotary portion 5 of the seal, a separate housing 27 being located within the casing 20 and keyed to the shaft 2 by a lock means at 28. The housing 27 comprises three projections 29 at a pitch of 120° which guide and drive the rotary portion 5.

The interior of the casing 20 adjoins a radially extending portion 30 of the plate 24 against one side of which the spring 15 bears and against the other side of which the housing 27 is fitted.

One considerable advantage of the embodiment shown in Figs. 3 and 4, despite the possible provision of the housing 27, is that the overall length of the compressor can be reduced by at least the axial length of the bearing, which may be up to 20 mm, and this therefore provides additional significant cost savings as regards materials. It also means that the length of the shaft 2 can be shortened, which is advantageous as regards wear and component part dimensioning. Further, the drive plate component shown in Fig. 4 can be manufactured by moulding or forging with the casing 20 forming an integral part thereof. This means that a separate machining operation to form the casing 20 is not required thus also saving on materials and manufacturing time.

## Claims

1. A mechanical axial seal (1) arrangement for a swash or wobble plate compressor having a drive mechanism (21:24), comprising a rotary portion (5) for rotation with a drive shaft (2) of the compressor and a stationery portion (4) that cooperates with the rotary portion (5) to form a seal,
**characterised in that**
the rotary portion (5) is located in a casing (20) defined by an axially extended portion of the drive mechanism (21:24) of the compressor.

2. A seal arrangement as claimed in Claim 1,
**characterised in that**
the casing (20) forms a housing for the rotary portion (5) of the seal.

3. A seal arrangement as claimed in Claim 1 or Claim 2,
**characterised in that**
the casing (20) is formed by an extension to a portion of the drive mechanism which defines one of the races (21) for a bearing (22) for the drive shaft. (2).

4. A seal arrangement as claimed in any of Claims 1 to 3,
**characterised in that**
the casing (20) is formed by an extension to a drive plate (24) for the swash or wobble plate of the compressor.

5. A seal arrangement as claimed in Claim 4,
**characterised in that**
the rotary portion (5) is located parallel, radially, with a bearing (22) for the drive shaft (2).

6. A seal arrangement as claimed in Claim 4 or Claim 5,
**characterised in that**
the casing (20) defines on an outer circumferential surface an inner race (26) of the bearing (22).

7. A seal arrangement as claimed in Claim 6,
**characterised in that**
the casing (20) comprises an axial cylindrical projection having an outer surface defining the race (26) and an inner surface defining a recess in which the rotary portion (5) is located.

8. A seal arrangement as claimed in Claim 7,
**characterised in that**
the drive plate (24) is formed integrally with the axial cylindrical projection (20) by moulding or forging.

9. A seal arrangement as claimed in any of Claims 1 to 8,
**characterised in that**
the rotary portion (5) comprises a gasket ring (12) and an O-ring (13), which is located in an annular recess (16) defined by the gasket ring (12) to seal the joint between the shaft (2) and the gasket ring (12).

10. A seal arrangement as claimed in Claim 9,
**characterised in that**
the casing (20) comprises one or more guide members (23) which project from an edge of the casing (20) and engage a circumference of the gasket ring (12) to hold it in Position.

11. A seal arrangement as claimed in Claim 10,
**characterised in that**
the guide members (23) engage respectively in one or more axial grooves (26) defined by the gasket ring (12) so that the gasket ring (12) can be displaced axially along the shaft (2).

12. A seal arrangement as claimed in any of Claims 1 to 11,
**characterised in that**
the rotary portion (5) is urged into contact with the stationary portion (4) by a spring (15) which bears against a face (19: 25,30) defined by the drive mechanism (21:24) of the compressor.

13. A compressor for a vehicle air conditioning System seal,
**characterised in that**
it comprises a mechanical axial seal arrangement (1) as claimed in any of Claims 1 to 12.

14. A compressor for a vehicle air conditioning system comprising a housing (3), a drive shaft (2), a swash or wobble plate arrangement operatively connected to the drive shaft (2) and driven by a drive mechanism (21:24) attached to the shaft (2), and a mechanical axial seal (1) comprising a rotary portion (5) that rotates with the drive shaft (2) and a stationary portion (4) that cooperates with the rotary portion (5) to form a seal, wherein the rotary portion (5) is located in a casing (20) which is defined by an axially extended portion of the drive mechanism (21:24) of the compressor and wherein the casing (20) forms a housing for the rotary portion (5) of the seal,
**characterised in that**
the casing (20) is formed by an extension to a portion of the drive mechanism which defines one of the races (21) for a bearing (22) for the drive shaft (2).

15. A compressor as claimed in Claim 14,
**characterised in that**
the casing (20) is formed by a recess defined in a drive plate (24) of the drive mechanism.

16. A compressor as claimed in Claim 15,
**characterised in that**
the drive plate (24) is integrally formed with the drive shaft (2).

## Patentansprüche

1. Mechanische Axialdichtungsanordnung (1) für einen Taumelscheibenkompressor mit einer Antriebseinrichtung (21 : 24), einen drehenden Abschnitt (5) zur Drehung mit einer Antriebswelle (2) des Kompressors, und einen feststehenden Abschnitt (4) umfassend, der mit dem drehenden Abschnitt (5) zusammenwirkt, um eine Dichtung zu bilden,
**dadurch gekennzeichnet, dass**
sich der drehende Abschnitt (5) in einem Gehäuse (20) befindet, das durch einen axial verlängerten Abschnitt der Antriebseinrichtung (21 : 24) des Kompressors gebildet ist.

2. Dichtungsanordnung nach Anspruch 1,
**dadurch gekennzeichnet, dass**
das Gehäuse (20) ein Gehäuse für den drehenden Abschnitt (5) der Dichtung bildet.

3. Dichtungsanordnung nach Anspruch 1 oder 2,
**dadurch gekennzeichnet, dass**
das Gehäuse (20) durch eine Verlängerung an einem Abschnitt der Antriebseinrichtung gebildet ist, welcher einen der Laufringe (21) für ein Lager (22) der Antriebswelle (2) bildet.

4. Dichtungsanordnung nach einem der Ansprüche 1 bis 3,
**dadurch gekennzeichnet, dass**
das Gehäuse (20) durch eine Verlängerung an einer Antriebsplatte (24) für die Taumelscheibe des Kompressors gebildet ist.

5. Dichtungsanordnung nach Anspruch 4,
**dadurch gekennzeichnet, dass**
der drehende Abschnitt (5) parallel, radial mit einem Lager (22) für die Antriebswelle (2) angeordnet ist.

6. Dichtungsanordnung nach Anspruch 4 oder 5,
**dadurch gekennzeichnet, dass**
das Gehäuse (20) an einer äußeren Umfangsfläche einen inneren Laufring (26) für das Lager (22) bildet.

7. Dichtungsanordnung nach Anspruch 6,
**dadurch gekennzeichnet, dass**
das Gehäuse (20) einen axialen zylindrischen Vorsprung mit einer äußeren Fläche umfasst, die den Laufring (26) bildet, und eine innere Fläche, die eine Ausnehmung bildet, in der der drehende Abschnitt (5) angeordnet ist.

8. Dichtungsanordnung nach Anspruch 7,
**dadurch gekennzeichnet, dass**
die Antriebsplatte (24) durch Formen oder Schmieden einstückig mit dem axialen zylindrischen Vorsprung (20) ausgebildet ist.

9. Dichtungsanordnung nach einem der Ansprüche 1 bis 8,
**dadurch gekennzeichnet, dass**
der drehende Abschnitt (5) einen Dichtungsring (12) und einen O-Ring (13) umfasst, der in einer durch den Dichtungsring (12) gebildeten ringförmigen Ausnehmung (16) angeordnet ist, um die Verbindung zwischen der Welle (2) und dem Dichtungsring (12) abzudichten.

10. Dichtungsanordnung nach Anspruch 9,
**dadurch gekennzeichnet, dass**
das Gehäuse (20) ein Führungsteil oder mehrere Führungsteile (23) umfasst, die von einem Rand des Gehäuses (20) vorspringen und an einem Umfang des Dichtungsrings (12) angreifen, um ihn an der Stelle zu halten.

11. Dichtungsanordnung nach Anspruch 10,
**dadurch gekennzeichnet, dass**
die Führungsteile (23) jeweils in eine axiale Nut oder mehrere axiale Nuten (26) eingreifen, die durch den Dichtungsring (12) gebildet sind, so dass der Dichtungsring (12) entlang der Welle (2) axial verschoben werden kann.

12. Dichtungsanordnung nach einem der Ansprüche 1 bis 11,
**dadurch gekennzeichnet, dass**
der drehende Abschnitt (5) durch eine Feder (15) in Kontakt mit dem feststehenden Abschnitt (4) gedrückt wird, die an einer Fläche (19: 25, 30) anliegt, die durch die Antriebseinrichtung (21 : 24) des Kompressors gebildet ist.

13. Kompressor für eine Kraftfahrzeugklimaanlage,
**dadurch gekennzeichnet, dass**
er eine mechanische Axialdichtungsanordnung (1) nach einem der Ansprüche 1 bis 12 umfasst.

14. Kompressor für eine Kraftfahrzeugklimaanlage mit einem Gehäuse (3), einer Antriebswelle (2), einer Taumelscheibenanordnung, die in Wirkverbindung mit der Antriebswelle (2) steht und von einer an der Welle (2) befestigten Antriebseinrichtung (21 : 24) angetrieben wird, und einer mechanischen Axialdichtung (1), die einen drehenden Abschnitt (5), der sich mit der Antriebswelle (2) dreht, und einen feststehenden Abschnitt (4) umfasst, der mit dem drehenden Abschnitt (5) zusammenwirkt, um eine Dichtung zu bilden, wobei der drehende Abschnitt (5) in einem Gehäuse (20) angeordnet ist, das durch einen axial verlängerten Abschnitt der Antriebseinrichtung (21 : 24) des Kompressors gebildet ist, und wobei das Gehäuse (20) ein Gehäuse für den drehenden Abschnitt (5) der Dichtung bildet,
**dadurch gekennzeichnet, dass**
das Gehäuse (20) durch eine Verlängerung an einem Abschnitt der Antriebseinrichtung gebildet ist, die einen der Laufringe (21) für ein Lager (22) der Antriebswelle (2) bildet.

15. Kompressor nach Anspruch 14,
**dadurch gekennzeichnet, dass**
das Gehäuse (20) durch eine Ausnehmung gebildet ist, die in einer Antriebsplatte (24) der Antriebseinrichtung ausgebildet ist.

16. Kompressor nach Anspruch 15,
**dadurch gekennzeichnet, dass** die Antriebsplatte (24) einstückig mit der Antriebswelle (2) ausgebildet ist.

## Revendications

1. Agencement formant joint axial mécanique (1) pour un compresseur à plateau oscillant ou cyclique comportant un mécanisme d'entraînement (21-24), comprenant une partie rotative (5) destinée à tourner avec un arbre d'entraînement (2) du compresseur et une partie stationnaire (4) qui coopère avec la partie rotative (5) pour former un joint, **caractérisé en ce que** la partie rotative (5) est située dans un carter (20) défini par une partie étendue axialement du mécanisme d'entraînement (21-24) du compresseur.

2. Agencement formant joint selon la revendication 1, **caractérisé en ce que** le carter (20) forme un logement pour la partie rotative (5) du joint.

3. Agencement formant joint selon la revendication 1 ou 2, **caractérisé en ce que** le carter (20) est formé par un prolongement d'une partie du mécanisme d'entraînement qui définit l'une des cages (21) destinées à un roulement (22) pour l'arbre d'entraînement (2).

4. Agencement formant joint selon l'une quelconque des revendications 1 à 3, **caractérisé en ce que** le carter (20) est formé par un prolongement d'un plateau d'entraînement (24) pour le plateau oscillant ou cyclique du compresseur.

5. Agencement formant joint selon la revendication 4, **caractérisé en ce que** la partie rotative (5) est située parallèlement, radialement, à un roulement (22) pour l'arbre d'entraînement (2).

6. Agencement formant joint selon la revendication 4 ou 5, **caractérisé en ce que** le carter (20) définit sur une surface circonférentielle extérieure une cage intérieure (26) du roulement (22).

7. Agencement formant joint selon la revendication 6, **caractérisé en ce que** le carter (20) comprend une saillie cylindrique axiale comportant une surface extérieure définissant la cage (26) et une surface intérieure définissant un enfoncement dans lequel la partie rotative (5) est située.

8. Agencement formant joint selon la revendication 7, **caractérisé en ce que** le plateau d'entraînement (24) est formé intégralement avec la saillie cylindrique axiale (20) par moulage ou forgeage.

9. Agencement formant joint selon l'une quelconque des revendications 1 à 8, **caractérisé en ce que** la partie rotative (5) comprend une bague d'étanchéité (12) et un joint torique (13), qui est situé dans un enfoncement annulaire (16) défini par la bague d'étanchéité (12) pour obturer la jonction entre l'arbre (2) et la bague d'étanchéité (12).

10. Agencement formant joint selon la revendication 9, **caractérisé en ce que** le carter (20) comprend un ou plusieurs éléments de guidage (23) qui font saillie à partir d'un bord du carter (20) et mettent en prise une circonférence de la bague d'étanchéité (12) pour la maintenir en position.

11. Agencement formant joint selon la revendication 10, **caractérisé en ce que** les éléments de guidage (23) viennent en prise respectivement dans une ou plusieurs rainures axiales (26) définies par la bague d'étanchéité (12) de sorte que la bague d'étanchéité (12) peut être déplacée axialement le long de l'arbre (2).

12. Agencement formant joint selon l'une quelconque des revendications 1 à 11, **caractérisé en ce que** la partie rotative (5) est poussée en contact avec la partie stationnaire (4) par un ressort (15) qui appuie sur une face (19-25, 30) définie par le mécanisme d'entraînement (21-24) du compresseur.

13. Compresseur pour un joint de système de climatisation de véhicule, **caractérisé en ce qu'**il comprend un agencement formant joint axial mécanique (1) selon l'une quelconque des revendications 1 à 12.

14. Compresseur destiné à un système de climatisation de véhicule, comprenant un logement (3), un arbre d'entraînement (2), un agencement à plateau oscillant ou cyclique connecté de façon opérationnelle à l'arbre d'entraînement (2) et entraîné par un mécanisme d'entraînement (21-24) rattaché à l'arbre (2), et un joint axial mécanique (1) comprenant une partie rotative (5) qui tourne avec l'arbre d'entraînement (2) et une partie stationnaire (4) qui coopère avec la partie rotative (5) pour former un joint, dans lequel la partie rotative (5) est située dans un carter (20) qui est défini par une partie étendue axialement du mécanisme d'entraînement (21-24) du compresseur et dans lequel le carter (20) forme un logement pour la partie rotative (5) du joint, **caractérisé en ce que** le carter (20) est formé par un prolongement d'une partie du mécanisme d'entraînement qui définit l'une des cages (21) destinées à un roulement (22) pour l'arbre d'entraînement (2).

15. Compresseur selon la revendication 14, **caractérisé en ce que** le carter (20) est formé par un enfoncement défini dans un plateau d'entraînement (24) du mécanisme d'entraînement.

16. Compresseur selon la revendication 15, **caractérisé en ce que** le plateau d'entraînement (24) est formé intégralement avec l'arbre d'entraînement (2).
